# EUROPÄISCHE PATENTSCHRIFT

(11) **EP 1 780 459 B1**
(45) Veröffentlichungstag und Bekanntmachung des Hinweises auf die Patenterteilung: **18.03.2009**
(21) Anmeldenummer: 06405448.9
(22) Anmeldetag: 23.10.2006
(51) Int. Cl.: F16L 55/178, F16L 13/14

(54) **Vorrichtung zum Abdichten von Muffen und undichten Pressverbindungen**
Device for sealing of sockets and leaking press fittings
Dispositif pour étancher des manchons et des raccords à sertissage non étanches

(30) Priorität: 25.10.2005 CH 17132005; 26.10.2005 DE 202005016869 U
(43) Veröffentlichungstag der Anmeldung: 02.05.2007
(73) Patentinhaber: Agim Ramnabaja, 8046 Zürich (CH)
(72) Erfinder: Agim Ramnabaja, 8046 Zürich (CH)
(74) Vertreter: Schneider Feldmann AG Patent- und Markenanwälte

(56) Entgegenhaltungen:
- EP-A- 0 024 709
- EP-A2- 1 505 329
- CH-A- 225 024
- US-A- 3 689 110
- US-A- 5 022 684
- US-A- 5 219 186

## Beschreibung

### Technisches Gebiet

Die Erfindung betrifft eine Vorrichtung zum Abdichten von undichten Muffen und Pressverbindungen, gemäss dem Oberbegriff des unabhängigen Anspruchs 1.

### Stand der Technik

Bei der Installation werden Rohre für den Transport von Gasen und Flüssigkeiten in der Regel mittels Muffen verbunden. Bei einer althergebrachten Technik werden die Rohre mit einem Dichtungsmaterial, z.B. Hanffasern, umwickelt und in die Muffe eingeschoben. Das Dichtungsmaterial quillt durch Aufnahme von Feuchtigkeit auf und dichtet die Muffenverbindung ab. Bei einer modernen Lösung für Rohre aus Kunststoff werden die Muffe und das Rohr mittels eines in diese sog. Schweissmuffe eingelegten Stromleiters erhitzt und verschweisst.
Für die effiziente Installation von Rohrleitungen aus Metall werden die Rohre heute in aller Regel mit Pressmuffen verbunden. Bei solchen Pressverbindungen oder Pressfittings wird ein Metallrohr in eine plastisch verformbare Metallmuffe eingeschoben. Diese Muffe verfügt an den Längsenden über einen hohlen Wulst, in welchen ein Dichtungsring aus einem Elastomer eingelegt ist. Eine solche Pressverbindung wird beispielsweise gezeigt in EP 1'505'329 A2.
Mit einem speziell dafür vorgesehenen Werkzeug wird anschliessend die Muffe mit dem Rohr verpresst. Dies führt zum einen zu einer form- und kraftschlüssigen Verbindung von Muffe und Rohr, und zum anderen zu einem dichten Abschluss der Verbindung durch eine elastische Verformung des Dichtungsrings im Wulst.
Durch Fehlmanipulationen kann es vorkommen, dass der Dichtungsring der Pressmuffe beschädigt wird. Nach dem Verpressen ist dann die Pressverbindung nicht dicht Ebenso ist es möglich, dass unbemerkt ein Rohr beschädigt wird, beispielsweise beim Ablängen mittels einer Säge, was ebenfalls zu einer lecken Muffenverbindung führen kann. Der Kunststoff der Dichtungsringe kann zudem altem und dabei spröde und rissig werden. In einiger Zukunft ist deshalb eventuell vermehrt mit undichten Pressverbindungen zu rechnen.

US 5,022,684 zeigt eine Vorrichtung zum Abdichten von undichten Rohr-Muffen-Verbindungen, mit einem zweiteiligen Andruckstück mit einem Aussengewinde und einem zweiteiligen Gegenstück mit einem Innengewinde. Durch Einschrauben des Andruckstücks in das Gegenstück wird eine um das Rohr angebrachte Dichtung gegen Rohr und Muffe gedrückt, Die Teile des Andruckstücks werden durch hinterschnittene Nuten senkrecht zur Längsachse formschlüssig zusammengehalten. Die Teile des Gegenstücks werden mittels Flansch und Schraub-Mutter-Verbindung formschlüssig zusammengehalten.

US 3,689,110 zeigt eine ähnliche Vorrichtung zum Abdichten von undichten Muffen, mit einem Andruckstück mit einem Aussengewinde und einem Gegenstück mit einem Innengewinde. Die zweiteiligen Andruckstücke und Gegenstücke werden beide durch hinterschnittene Nuten senkrecht zur Längsachse formschlüssig zusammengehalten.

CH 225024 zeigt eine weitere Vorrichtung zum Abdichten von undichten Muffen, mit einem Andruckstück und einem Gegenstück, welche durch vier Längsschrauben gegeneinander gepresst werden. Die zweiteiligen Andruckstücke und Gegenstücke werden mittels Flansch und Schraub-Mutter-Verbindung formschlüssig zusammengehalten.

Da ein Leitungssystem normalerweise erst nach der endgültigen Erstellung befüllt wird, können etwaige Lecks oft erst nach Abschluss der Montage entdeckt und repariert werden. Während für die Reparatur von Lecks von Rohren während des Betriebs, also ohne Auswechseln des defekten Rohres, Lösungen bekannt sind, müssen defekte Muffenverbindungen, insbesondere Pressverbindungen, komplett ausgetauscht werden. Dazu muss das Leitungssystem entleert werden, was bei grösseren Systemen wie beispielsweise Heizungsanlagen von grösseren Gebäuden einige Zeit in Anspruch nehmen kann. Bei gewissen Systemen, beispielsweise Klimaanlagen, kann zudem der Leitungsinhalt nicht einfach in die Kanalisation abgelassen werden, da er toxische Substanzen enthält, und muss darum aufgefangen werden. Nach der Entleerung muss die defekte Muffe entfernt werden, was nur durch absägen möglich ist. Für die Reparatur sind dann schon in den einfacheren Fällen zwei Pressmuffen und ein Zwischenrohrstück erforderlich. Bei komplizierteren Fällen, beispielsweise bei T-Stücken, ist der Material- und Zeitaufwand noch grösser. Anschliessend an die Reparatur des Lecks muss das Leitungssystem wieder befüllt und dabei auch entlüftet werden, was ebenfalls viel Zeit in Anspruch nehmen kann. Es ist also durchaus möglich, dass die Reparatur einer einzigen undichten Pressmuffe mehrere Stunden in Anspruch nimmt.

### Darstellung der Erfindung

Aufgabe der Erfindung ist es, eine Abdichtungsvorrichtung der eingangs erwähnten Art zur Verfügung zu stellen, mit welcher undichte Muffen und Pressverbindungen während des Betriebs des Leitungssystems und ohne aufwendiges Auswechseln der Verbindung schnell und dauerhaft abgedichtet und repariert werden können.

Diese und andere Aufgaben werden durch eine erfindungsgemässe Vorrichtung gemäss dem unabhängigen Anspruch gelöst. Weitere bevorzugte Ausführungsformen sind in den abhängigen Ansprüchen gegeben.

Das Prinzip einer erfindungsgemässen Abdichtungsvorrichtung beruht darauf, dass eine undichte Muffenverbindung an der Eintrittsstelle des Rohrs in die Muffe über den gesamten Rohrumfang neu abgedichtet wird. Zu diesem Zweck besteht die erfindungsgemässe Vorrichtung aus einem den Rohrumfang umfassenden Andruckstück, mit welchem eine zusätzliche Dichtung auf den Zwischenraum zwischen Muffe und Rohr gedrückt wird, und einem den Muffenkörper umfassenden Gegenstück, mittels dem das Andruckstück in Richtung Muffenkörper gezogen werden und form- und kraftschlüssig fixiert werden kann.
Das Andruckstück einer erfindungsgemässen Abdichtungsvorrichtung weist im wesentlichen die Form eines Hohlzylinders mit einem Aussengewinde auf, mit einem Innendurchmesser, der gleich gross oder leicht grösser ist als der Aussendurchmesser des Rohres, und einem Aussendurchmesser, der grösser ist als der maximale Durchmesser der Muffe.
Das Gegenstück hat ebenfalls im wesentlichen die Form eines Hohlzylinders. Über einen Teil der Länge des Gegenstücks entspricht der Innendurchmesser dem Durchmesser einer Muffe zwischen den Aussenwülsten. Dieser Bereich umschliesst später die Muffe. Über die verbleibende Länge verfügt das Gegenstück über ein Innengewinde mit dem gleichen Durchmesser wie das Aussengewinde des Andruckstücks. Nachdem eine neue Dichtung angebracht worden ist, durch Umwickeln des Rohres mit Dichtungsschnur im Bereich des Muffenwulstes oder durch Anbringen eines geeignet modifizierten Dichtungsringes, wird das Andruckstück in das Gegenstück eingeschraubt, und drückt so die Dichtung auf die Lücke zwischen Rohr und Muffe.

Damit Andruckstück und Gegenstück einer erfindungsgemässen Abdichtungsvorrichtung um das fertig installierte Rohr bzw. um die Muffe herum montiert werden können, müssen sie jeweils aus mindestens zwei Halbschalen bestehen, welche einen Öffnungswinkel von maximal 180° aufweisen. Die mindestens zwei Teile des Gegenstücks müssen miteinander form- und/oder kraftschlüssig verbunden sein. Beim Andruckstück, welches in das Gegenstück eingeschraubt wird, müssen die mindestens zwei Teile nicht zwingend miteinander verbunden werden, da diese durch das Einschrauben von alleine aneinander fixiert werden,
Zusätzlich ist es von Vorteil, Andruckstück und Gegenstück mit Mitteln auszustatten, welche es erlauben, ein Drehmoment auf diese auszuüben. Möglich sind zum Beispiel Vertiefungen, an denen eine Zange angreifen kann, oder Ankopplungsstellen für spezielle Schlüssel.

### Kurze Beschreibung der Zeichnungen

Im folgenden wird die erfindungsgemässe Vorrichtung anhand von Zeichnungen erläutert.
Figur 1 zeigt im Längsschnitt eine Pressverbindung, bestehend aus einer Pressmuffe mit eingeschobenem Rohr, bei welcher durch ein Leck in der Dichtung der Pressmuffe Flüssigkeit bzw. Gas austritt.
Figur 2 zeigt im Längsschnitt die undichte Pressverbindung aus Figur 1, abgedichtet durch eine erfindungsgemässe Abdichtungsvorrichtung, im wesentlichen bestehend aus einem Andruckstück und einem Gegenstück.
Figur 3a zeigt im Längsschnitt das Gegenstück der erfindungsgemässen Abdichtungsvorrichtung aus Figur 2, wobei die Schnittebene senkrecht zur Schnittebene in Figur 2 liegt.
Figur 3b zeigt das Gegenstück aus Figur 3a, vom dem Andruckstück entgegengesetzten Längsende her gesehen.
Figur 4a zeigt im Längsschnitt das Andruckstück der erfrndungsgemässen Abdichtungsvorrichtung aus Figur 2, wobei die Schnittebene senkrecht zur Schnittebene in Figur 2 liegt.
Figur 4b zeigt das Andruckstück aus Figur 4a, vom dem Gegenstück entgegengesetzten Längsende her gesehen.
Figur 5 zeigt eine weitere Gestaltungsform eines Gegenstücks für eine erfindungsgemässe Abdichtungsvorrichtung, im Längsschnitt und vom einem Andruckstück entgegengesetzten Längsende her gesehen.
Figur 5a zeigt eine Zeichnung einer erfindungsgemässen Abdichtungsvorrichtung in zerlegtem Zustand, bestehend aus Andruckstück, Gegenstück und Stiften.
Figur 5b zeigt das Gegenstück und das Andruckstück aus Figur 5a, in teilweise zusammengesetztem Zustand.
Figur 5c zeigt eine weitere Zeichnung der erfindungsgemässen Abdichtungsvorrichtung aus Figur 5a, in zusammengesetztem Zustand.
Figur 5d zeigt eine Zeichnung einer Pressmuffe mit eingeschobenem Rohr, abgedichtet durch die erfindungsgemässe Abdichtungsvorrichtung aus den Figuren 5a bis 5c.
Figur 5e zeigt eine weitere Gestaltungsform eines Gegenstücks für eine erfindungsgemässe Abdichtungsvorrichtung, von der Seite her und vom einem Andruckstück entgegengesetzten Längsende her gesehen.
Figur 5f zeigt eine weitere Gestaltungsform eines Andruckstücks für eine erfindungsgemässe Abdichtungsvorrichtung, von der Seite her und vom einem Gegenstück entgegengesetzten Längsende her gesehen.
Figur 8 zeigt eine weitere mögliche Gestaltungsform eines Andruckstücks für eine erfindungsgemässe Abdichtungsvorrichtung, in Längsrichtung vom einem Gegenstück entgegengesetzten Längsende her gesehen.
Figur 9 zeigt im Längsschnitt eine undichte Pressmuffe mit eingeschobenem Rohr, abgedichtet durch eine weitere Gestaltungsform einer erfindungsgemässen Abdichtungsvorrichtung.
Figur 10 zeigt im Längsschnitt eine an zwei Enden undichte Pressmuffe mit zwei eingeschobenen Rohren, abgedichtet durch eine weitere Gestaltungsform einer erfindungsgemässen Abdichtungsvorrichtung.
Figur 11 zeigt im Längsschnitt eine an zwei Enden undichte Pressmuffe mit zwei eingeschobenen Rohren, abgedichtet durch eine weitere Gestaltungsform einer erfindungsgemässen Abdichtungsvorrichtung.

### Ausführung der Erfindung

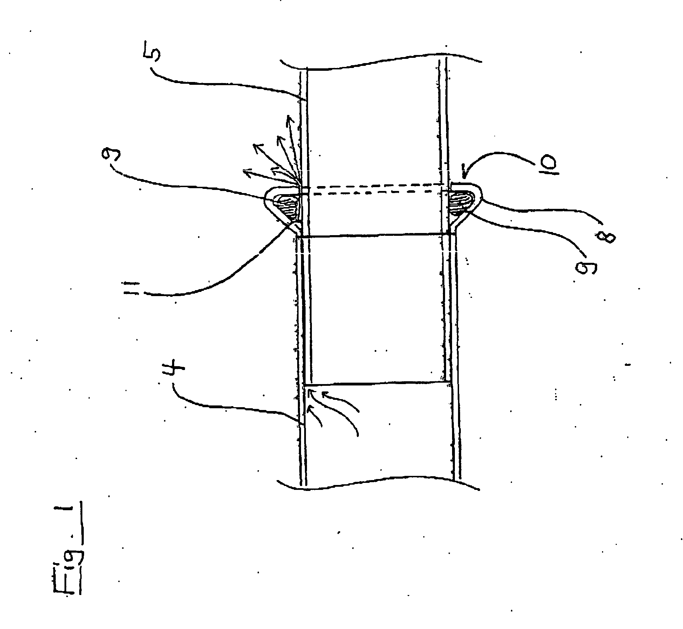

Die Probleme einer undichten Pressverbindung werden in Figur 1 ersichtlich, welche eine solche Pressverbindung im Längsschnitt zeigt. Beim Erstellen einer solchen Verbindung wird ein Rohr 5 in eine Pressmuffe 4, auch Pressfitting genannt, eingeschoben. Diese Pressmuffe 4, welche an ihrem Ende einen Wulst 8 mit darin eingelegtem Dichtungsring 9 aufweist, wird anschliessend mittels eines dafür geeigneten Werkzeugs mit dem Rohr 5 irreversibel verpresst. Dabei wird der Dichtungsring 9 bündig an das Rohr 5 gedrückt, die Pressverbindung ist dicht. Falls jedoch der Dichtungsring 9 beschädigt wird, beispielsweise bei der Montage, kann es zu einem Leck 11 kommen. Flüssigkeit oder Gas kann dann unter Druck aus dem Inneren des Rohres 5 zwischen Rohr und Muffe hindurch durch das Leck strömen, und an der Frontseite 10 der Muffe 4 austreten.

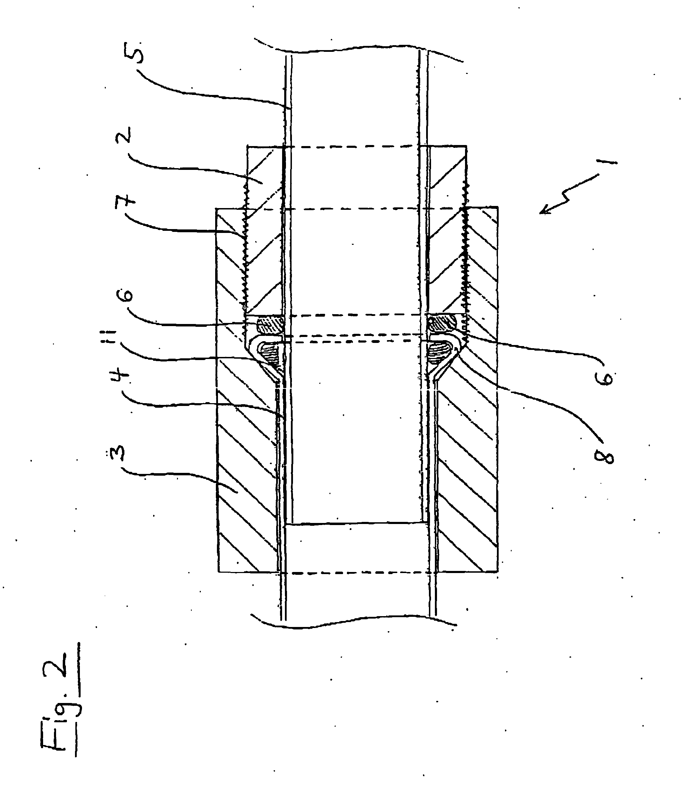

Figur 2 zeigt im Längsschnitt eine mögliche Ausgestaltung einer erfindungsgemässen Abdichtungsvorrichtung 1, mit einem Andruckstück 2 und einem Gegenstück 3.
Vor der Montage der erfindungsgemässen Abdichtungsvorrichtung 1 wurde an der Frontseite der Muffe 4 eine Dichtung 6 angebracht. Diese Dichtung kann kein üblicher, geschlossener Dichtungsring sein, weil sie ja nicht auf das Rohr 5 aufgeschoben werden kann. Am einfachsten wird die Dichtung 6 durch Umwickeln des Rohres 5 mit Dichtungsschnur erstellt, beispielsweise Gummischnur oder Teflonschnur mit z.B. 2 mm Durchmesser.
Alternativ kann auch ein modifizierter Dichtungsring verwendet werden, bestehend aus einem durchtrennten Dichtungsring. Dessen Durchtrennungsfläche ist so ausgestaltet, dass mit Blick auf die Ringebene sich die beiden Enden des durchtrennten Rings überlappen. Ein derartiger Dichtungsring kann nun einfach an der undichten Muffe angebracht werden. Bei späteren Zusammenpressen der Dichtung senkrecht zur Ringebene werden dann die Durchtrennungsflächen aufeinander gedrückt, und die Dichtung ist dicht.
In einer weiteren Alternative können auch mehrere durch einfaches Zerschneiden aufgetrennte Dichtungsringe so übereinander auf dem Rohr angeordnet werden, dass die Schnittstellen zueinander versetzt sind.
Das Andruckstück 2, welches das Rohr 5 umfasst, ist in das die Muffe 4 umfassende Gegenstück 3 eingeschraubt. Auf der Innenseite des Gegenstücks 3 steht dieses auf dem Wulst 8 der Muffe 4 auf. Durch das Eindrehen des Andruckstücks 2 wird dann die zuvor angebrachte Dichtung 6 gegen das Rohr 5 und die Frontseite der Muffe 4 gedrückt. Daraus resultiert eine Abdichtung des Zwischenraums zwischen Wulst 8 und Rohr 5. Die Pressverbindung ist dauerhaft abgedichtet und repariert.

Das Andruckstück 2 und das Gegenstück 3 können aus Metall gefertigt sein, insbesondere Aluminium, Stahl, Messing oder Chromstahl. Möglich ist auch eine Fertigung aus einem geeignetem Kunststoff.

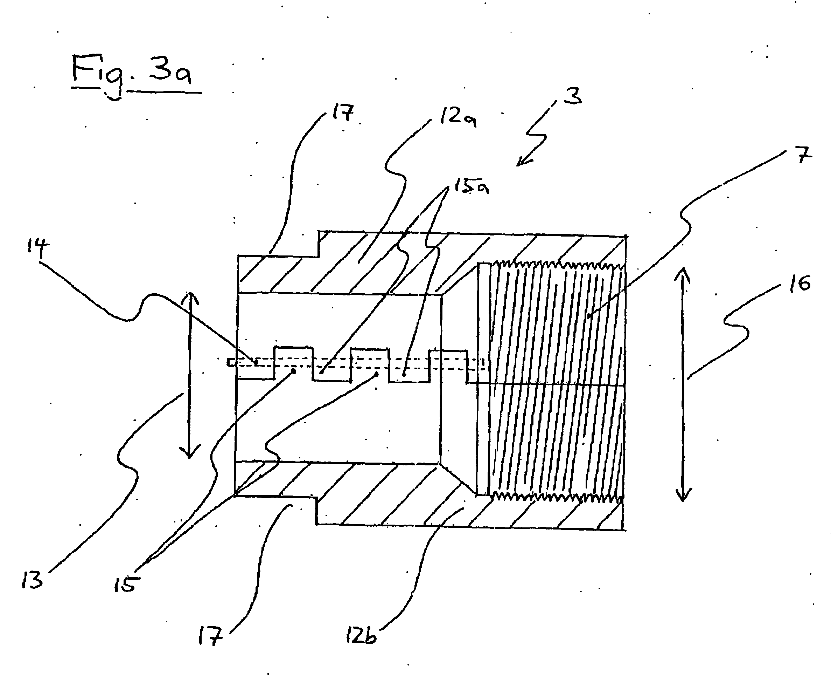

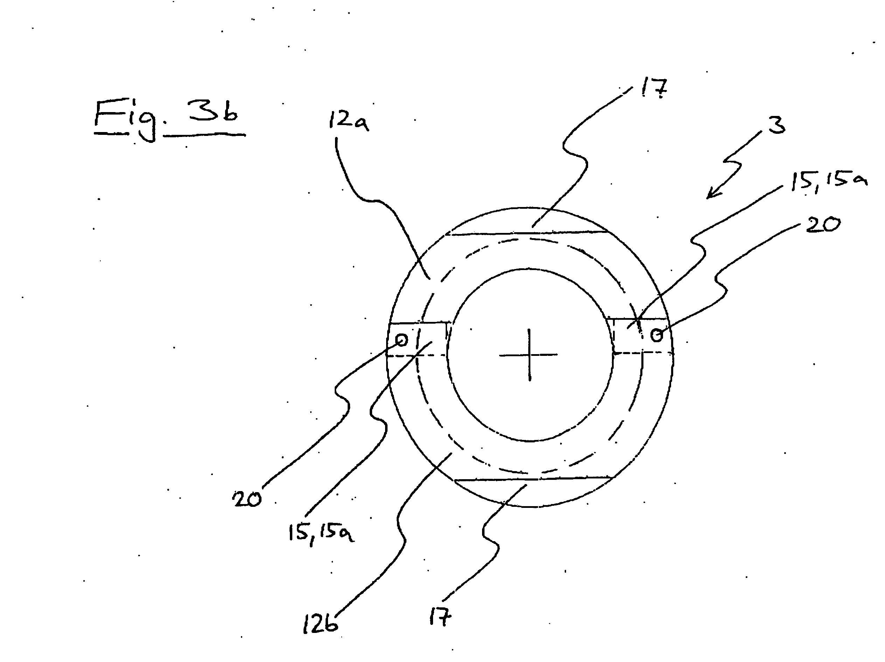

Die Figuren 3a und 3b zeigen das Gegenstück 3 aus Figur 2 im Längsschnitt und vom dem Andruckstück 2 entgegengesetzten Längsende her gesehen. Die Schnittebene der Figur 3a steht dabei senkrecht zur Schnittebene in Figur 2. Das Gegenstück ist zusammengesetzt aus einem ersten Teil 12a und einem zweiten Teil 12b. Im Bereich des kleineren Innendurchmessers 13 weisen die beiden Teile 12a, 12b Zähne 15, 15a auf, welche ineinander greifen, und so die Position der beiden Teile zueinander in Längsrichtung fixieren. Damit das zweite Teil 12b über eine Muffe gestülpt werden kann, weisen die Zähne 15 senkrechte Wände auf, was in Figur 3b durch die gestrichelten Linien gezeigt wird. Zur form- und kraftschlüssigen Verbindung der beiden Teile 12a, 12b quer zur Längsachse ist auf beiden Seiten durchgehend durch die Zähne 15, 15a eine Bohrung 20 angebracht, durch die nach dem Anbringen an der Rohrmuffe je ein Stift 14 gesteckt wird. Dieser wird in einer vorteilhaften Variante am aussenliegenden Ende so ausgestaltet, dass er gegebenenfalls wieder entfernt werden kann. Der Durchmesser 16 des Innengewindes 7 muss grösser sein als der maximale Durchmesser einer Muffe am Wulst. Am dem Innengewinde 7 entgegengesetzten Ende des Gegenstücks 3 sind zwei Vertiefungen 17 angebracht, an denen beispielsweise eine Rohrzange angreifen kann.
In einer möglichen Variante könnten statt zwei auch vier oder sechs Vertiefungen 17 verwendet werden. Im letzteren Fall würde das eine Ende des Gegenstücks 3 die Form einer Sechskantmutter aufweisen. Denkbar ist auch, das Gegenstück über die gesamte Länge sechskantig auszuführen.

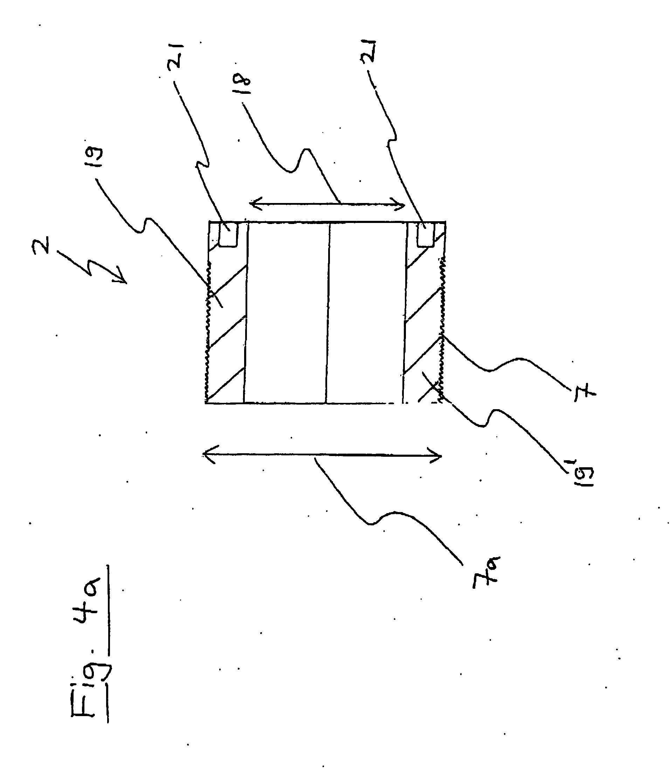

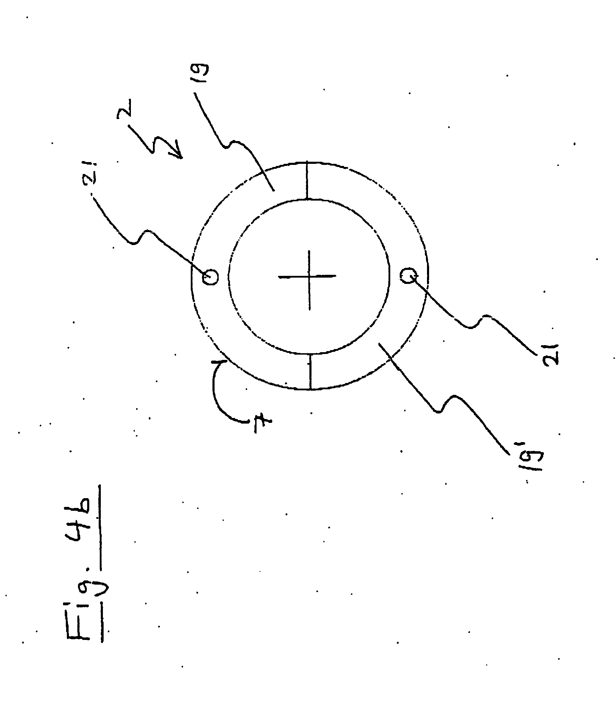

Die Figuren 4a und 4b zeigen das Andruckstück 2 aus Figur 2 im Längsschnitt und vom dem Gegenstück 3 entgegengesetzten Längsende her gesehen. Die Schnittebene der Figur 4a steht dabei wiederum senkrecht zur Schnittebene in Figur 2. Das Andruckstück 2 besteht aus zwei im wesentlichen identischen Teilen 19, 19'. Diese sind nicht miteinander verbunden. Jedoch werden diese beim Einschrauben in das Gegenstück 3 automatisch in der Position zueinander fixiert. Der Durchmesser 7a des Aussengewindes entspricht dem Innengewinde des Gegenstücks 3. Der Innendurchmesser 18 entspricht im wesentlichen dem Aussendurchmesser des Rohrs. Beide Teile sind mit einer Bohrung 21 versehen, in die ein Schlüssel mit entsprechenden Nocken eingreifen kann, um das Andruckstück 2 in das Gegenstück 3 einzudrehen.

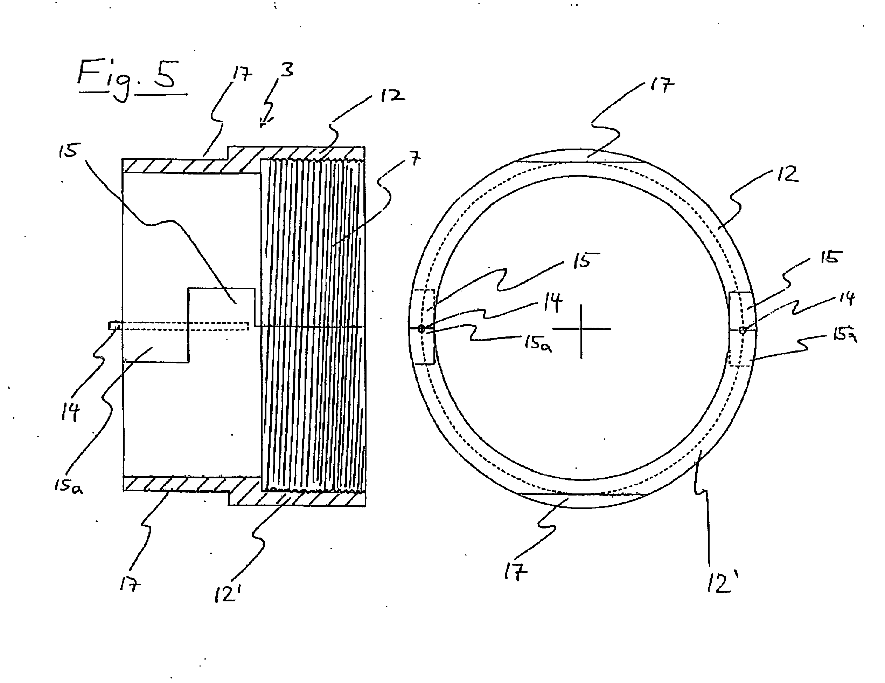

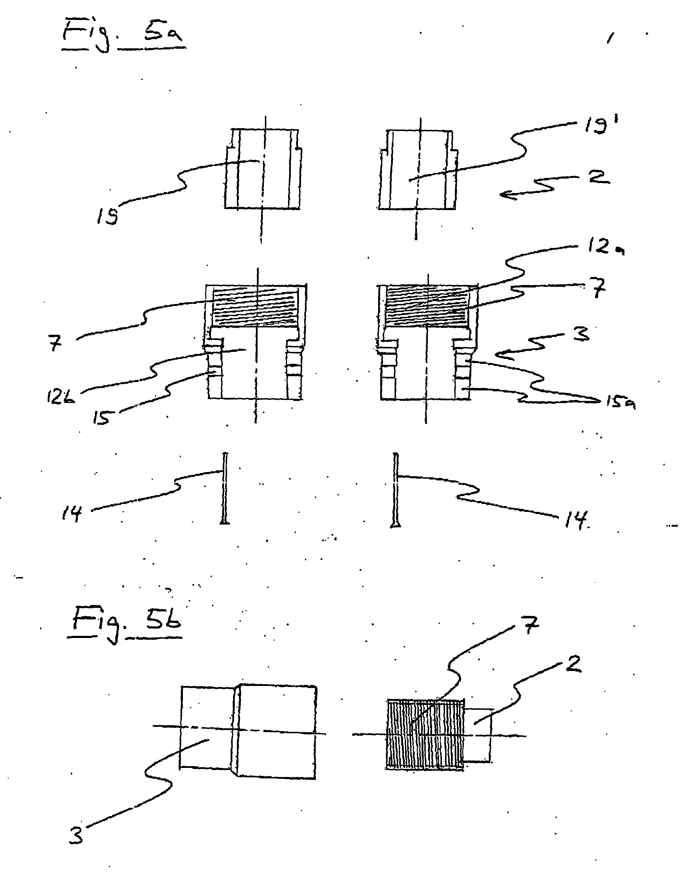

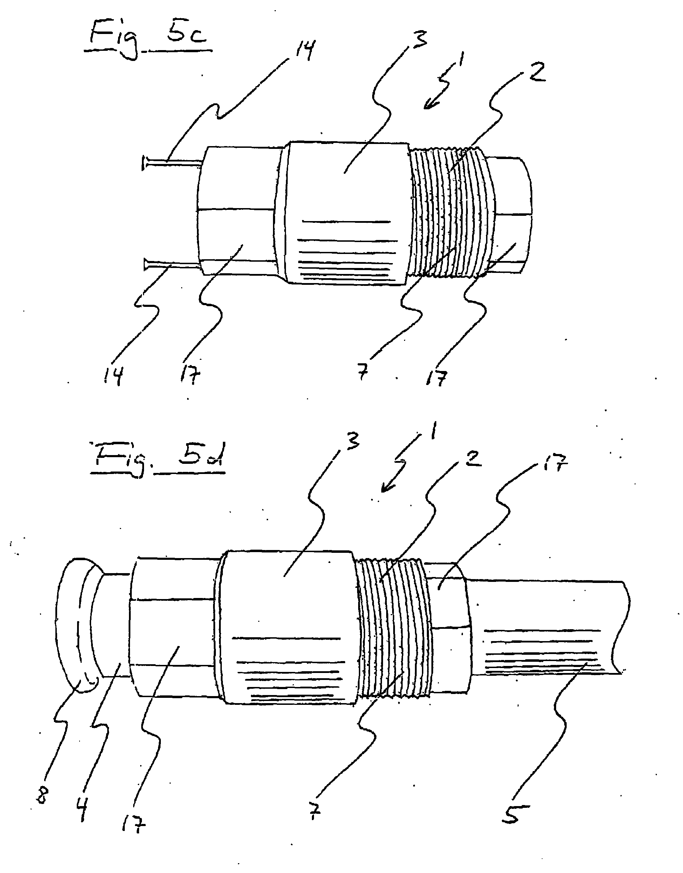

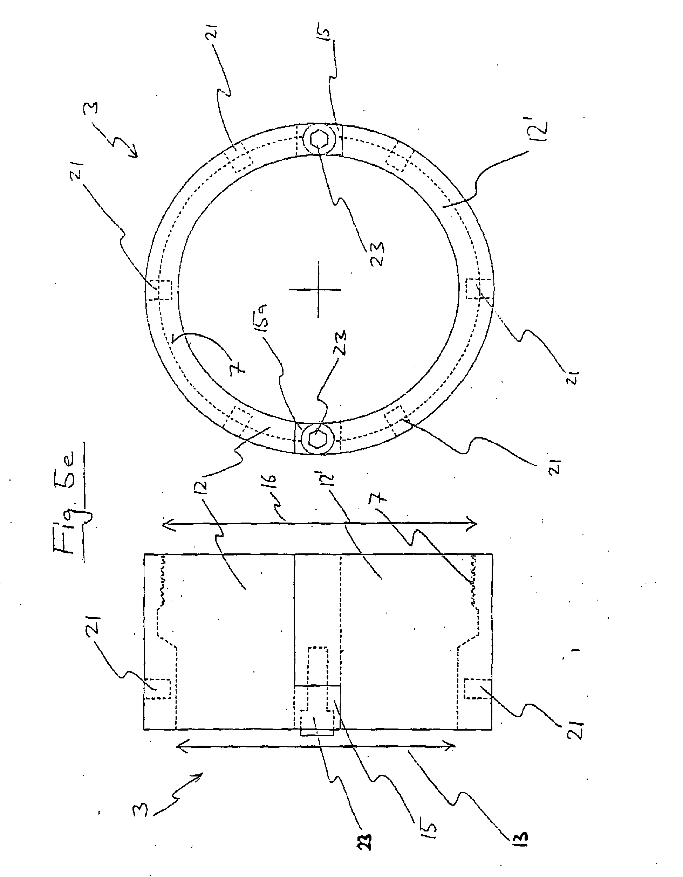

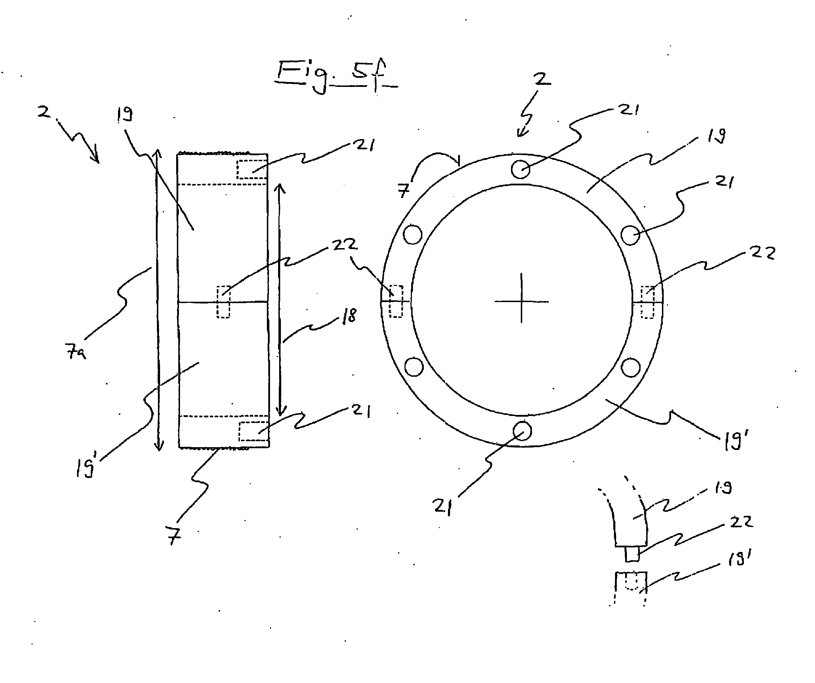

Figur 5 zeigt eine weitere Gestaltungsform für ein Gegenstück 3 für eine erfindungsgemässe Abdichtungsvorrichtung, in einem Längsschnitt, und vom dem Andruckstück entgegengesetzten Ende her gesehen. Im gezeigten Beispiel sind beide Teile 12, 12' des Gegenstücks 3 im wesentlichen identisch gestaltet, mit nur einem Zahn 15, 15a auf jeder Seite. Die Stifte 14 sind durchgehend durch die Zähne 15, 15a symmetrisch einander gegenüberliegend angeordnet. Die Zähne 15, 15a sind wiederum mit geraden Wänden ausgestattet. Die Vertiefungen 17 ziehen sich über einen Grossteil des gewindelosen Bereichs hin. Sowohl der gewindelose Bereich wie auch das Gewinde 7 sind kürzer im Vergleich zum Durchmesser des Gegenstücks 3 als im Gestaltungsbeispiel aus den Figuren 2, 3a und 3b. Der Übergangsbereich zwischen dem Gewindebereich und dem gewindelosen Bereich ist senkrecht zur Längsachse ausgeformt, und nicht konisch.
Ein Vorteil des Gegenstücks 3 in Figur 5 ist die Tatsache, dass zwei identische Teile 12, 12' verwendet werden können, falls ein passendes Gewinde gewählt wird. Zudem ermöglicht der verkürzte Aufbau eine Montage bei beengten Platzverhältnissen.

Figur 5a zeigt die Zeichnung einer erfindungsgemässen Abdichtungsvorrichtung in zerlegtem Zustand, mit einem aus zwei Teilen 19, 19' bestehenden Andruckstück 2 mit Aussengewinde (nicht sichtbar), einem aus zwei Teilen 12a, 12b bestehenden Gegenstück 3, und zwei Stiften 14. Die Zähne 15, 15a sind analog zum Gegenstück in Figur 3a, 3b gestaltet.
Die Figuren 5b und 5c zeigen die gleiche Abdichtungsvorrichtung 1 in teilweise zusammengebautem Zustand. In Figur 5c gut sichtbar sind die Vertiefungen 17 am Andruckstück 2 und am Gegenstück 3.

Figur 5d zeigt eine Pressverbindung bestehend aus Pressmuffe 4 und Rohr 5, abgedichtet durch die erfindungsgemässe Abdichtungsvorrichtung 1 aus Figur 5a, 5b, 5c.

Figur 5e zeigt eine weitere Gestaltungsform für ein Gegenstück 3 für eine erfindungsgemässe Abdichtungsvorrichtung, von der Seite her und vom dem Andruckstück entgegengesetzten Ende her gesehen. Wie schon in Figur 5 sind beide Teile 12, 12' des Gegenstücks 3 im wesentlichen identisch gestaltet. Die beiden Teile 12, 12' sind durch Schrauben 23 form- und kraftschlüssig verbunden. Im gezeigten Beispiel werden inbusschrauben verwendet, aber selbstverständlich können auch andere geeignete Schrauben gewählt werden. Die Zähne 15, 15a sind mit geraden Wänden ausgestattet. Der Übergangsbereich zwischen dem Gewindebereich mit Gewindedurchmesser 16 und dem gewindelosen Bereich mit Innendurchmesser 13 ist konisch gestaltet. Über den äusseren Umfang des Gegenstücks 3 sind sechs radiale Bohrungen 21 angeordnet. Diese können bei der Montage einer erfindungsgemässen Abdichtungsvorrichtung dazu benutzt werden, das Gegenstück 3 zu fixieren oder ein Drehmoment darauf auszuüben, indem ein Stab mit passendern Durchmesser oder auch ein Schraubenzieher in eine der Bohrungen 21 gesteckt wird. Solch eine Lösung ist natürlich auch für Andruckstücke möglich.
Das Gegenstück 3 in Figur 5e ist gut geeignet für Muffen und Pressverbindungen mit grösseren Durchmessern, beispielsweise 10cm.

Figur 5f zeigt eine weitere Gestaltungsform eines Andruckstücks 2 für eine erfindungsgemässe Abdichtungsvorrichtung, vom der Seite her und vom dem Gegenstück entgegengesetzten Ende her gesehen.
Die zwei Teile 19, 19' sind im wesentlichen identisch. Parallel zur Trennungsebene der Teile sind diese unverschiebbar fixiert durch zwei Nocken 22, die in entsprechende Vertiefungen eines Teils eingreifen. Die Nocken können alle an einem Teil angebracht werden. Es ist jedoch vorteilhaft, an jedem Teil einen Nocken 22 anzubringen, da so beide Teile 19, 19' identisch sind.

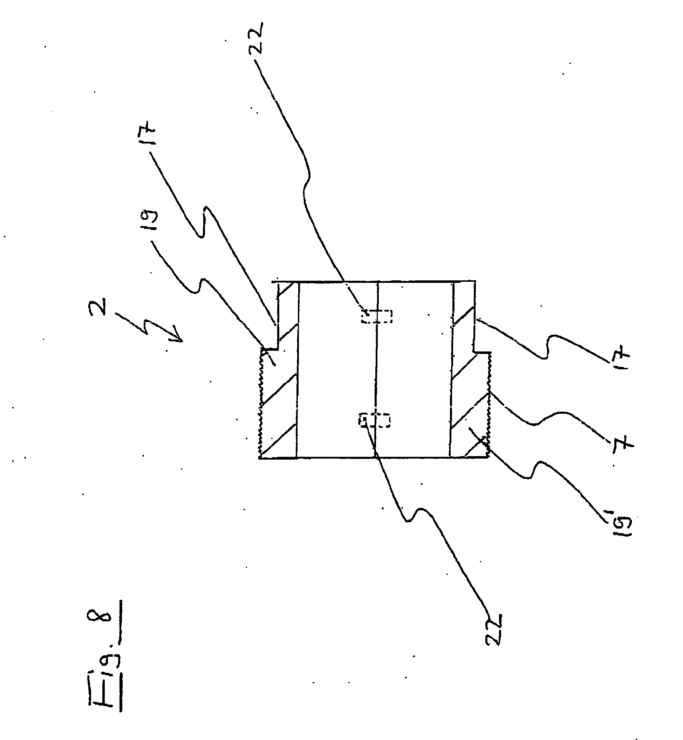

Figur 8 zeigt im Längsschnitt eine weitere Ausgestaltungsform für ein Andruckstück 2 einer erfindungsgemässen Abdichtungsvorrichtung. Die beiden Teile sind gegenseitig mit Nocken 22 gegen eine Verschiebung parallel zur Trennungsebene zwischen den beiden gleichen Teilen 19, 19' geschützt.
Eine solche Fixierung ist zwar prinzipiell nicht nötig, da die beiden Teile beim Einschrauben in das Gegenstück ohnehin fixiert werden. Jedoch erleichtert diese Variante das Handling bei der Montage.

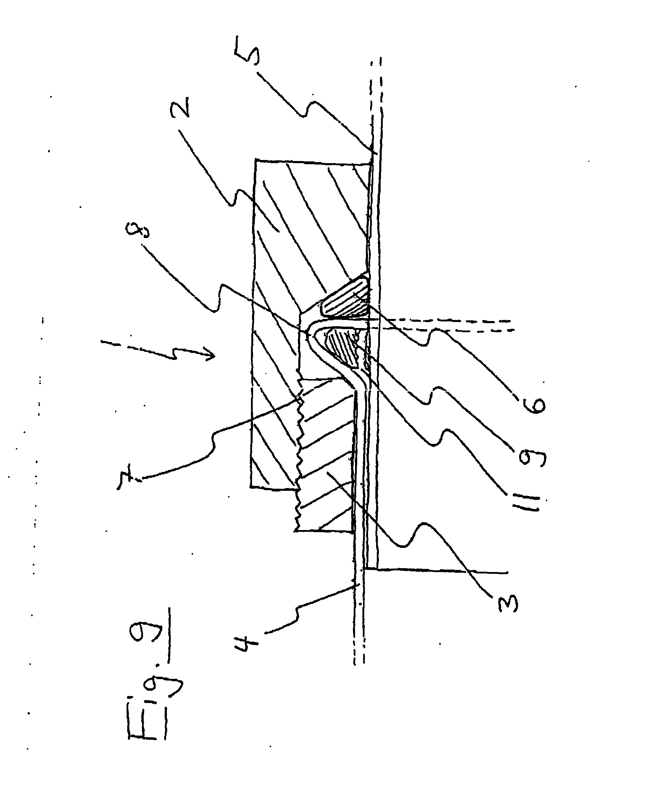

Figur 9 zeigt im Längsschnitt schematisch eine weitere Ausgestaltungsform einer erfindungsgemässen Abdichtungsvorrichtung 1. In diesem Beispiel sind die Rollen des Gegenstücks 3 und des Andruckstücks 2 vertauscht. Das Andruckstück 2 verfügt über ein Innengewinde, und das Gegenstück 3 über ein Aussengewinde. In diesem Fall müssen die mindestens zwei Teile des Andruckstücks 2 form- und kraftschlüssig verbunden werden. Die gezeigten Varianten für Gegenstück und Andruckstück können sinngemäss auch für diese gezeigte Ausgestaltung einer erfindungsgemässen Abdichtungsvorrichtung verwendet werden.

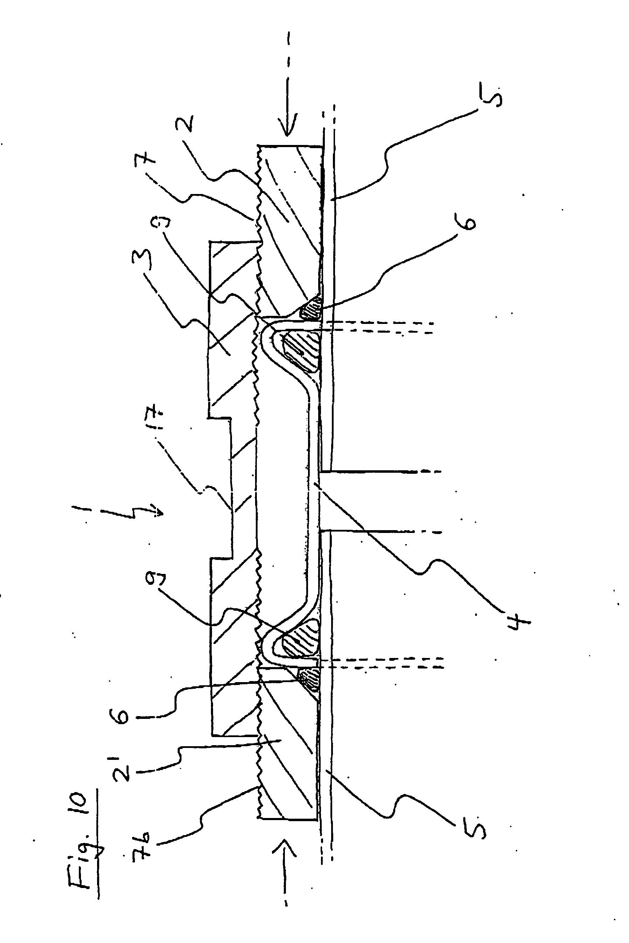

Figur 10 zeigt im Längsschnitt eine erfindungsgemässe Abdichtungsvorrichtung 1 für das Abdichten einer Muffe bzw. Pressverbindung mit zwei undichten Dichtungen 9. Die zwei an den gegenüberliegenden Enden der Muffe 4 angebrachten Andruckstücke 2, 2' sind gleich ausgestaltet und unterscheiden sich nur durch die gegenläufige Laufrichtung des Aussengewindes 7a beziehungsweise 7b. Das Gegenstück 3 verfügt an seinen gegenüberliegenden Enden über entsprechende gegenläufige Innengewinde.

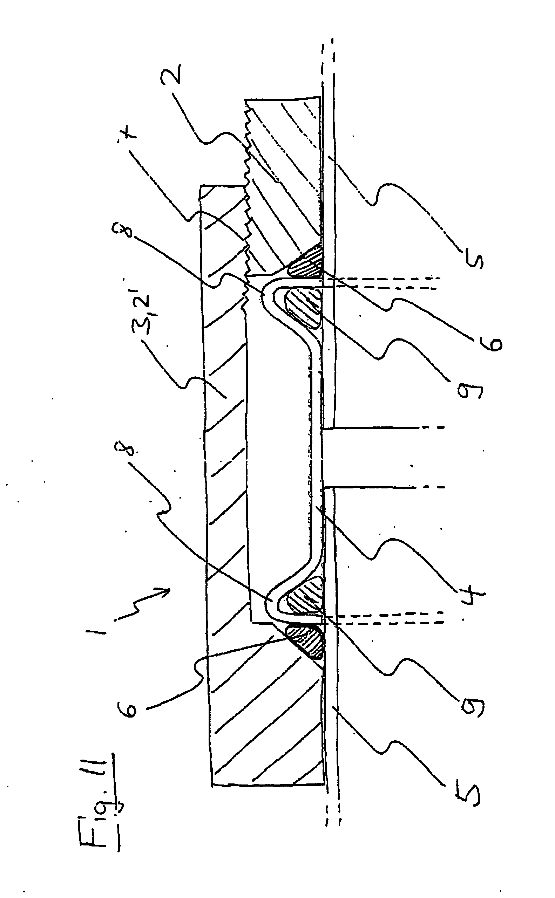

Figur 11 zeigt im Längsschnitt eine andere Gestaltungsform einer erfindungsgemässen Abdichtungsvorrichtung 1 für das Abdichten einer Muffe oder Pressverbindung mit zwei undichten Dichtungen 9. In dieser Variante dient das Gegenstück 3 gleichzeitig als zweites Andruckstück 2'.

Bei engen Platzverhältnissen, beispielsweise bei Muffen an Abzweigern oder Bogenstücken, ist eine möglichst platzsparende Bauweise einer erfindungsgemässen Abdichtungsvorrichtung von Vorteil. In solch einem Fall kann beispielsweise das Andruckstück sehr kurz gestaltet werden, beispielsweise mit einer Länge von nur 5 mm. Das Aussengewinde weist dann nur noch wenige Umgänge auf. Analog kann auch das Gegenstück sehr kurz gestaltet werden.

Bei Abdiclitungsvorrichtungen für grössere Muffen oder Pressverbindungen kann es von Vorteil sein, das Andruckstück beziehungsweise das Gegenstück aus drei oder mehr Teilen zusammengesetzt zu gestalten.
Zum Halten und Drehen eines Gegenstücks bzw. eines Andruckstücks einer erfindungsgemässen Abdichtungsvorrichtung können in einer weiteren vorteilhaften Variante über den äusseren Umfang eines Gegenstücks oder eines Andruckstücks längsgerichtete Rippen angeformt sein. Diese Gestaltungsform ist besonders günstig für die Montage von Hand. Zum Abschluss kann das Andruckstück oder Gegenstück wiederum mit einer Zange gefasst werden.

### Bezugszeichenliste

- 1: Abdichtvorrichtung
- 2, 2': Andruckstück
- 3: Gegenstück
- 4: Muffe
- 5: Rohr
- 6: Dichtung
- 7: Gewinde
- 7a: Gewindedurchmesser
- 7b: gegenläufiges Gewinde
- 8: Wulst
- 9: Dichtungsring
- 10: Frontseite
- 11: Leck
- 12, 12': Teil
- 12a: erstes Teil
- 12b: zweites Teil
- 13: Innendurchmesser
- 14: Stift
- 15, 15a: Zahn
- 16: Gewindedurchmesser
- 17: Vertiefung
- 18: Innendurchmesser
- 19, 19': Teil
- 20, 21: Bohrung
- 22: Nocken
- 23: Schraube

## Patentansprüche

1. Vorrichtung (1) zum Abdichten von undichten Muffen und Pressverbindungen, mit einem Andruckstück (2), das um ein Rohr (5) herum anbringbar ist, und einem Gegenstück (3), das um eine mit dem genannten Rohr (5) verbundene Muffe (4) herum anbringbar ist, wobei
das Andruckstück (2) und das Gegenstück (3) jeweils ein Gewinde (7) aufweisen und über diese Gewinde (7) formschlüssig miteinander verbindbar sind,
das Andruckstück (2) aus mindestens zwei Teilen (19, 19') und das Gegenstück (3) aus mindestens zwei Teilen (12a, 12b, 12, 12') besteht, und mittels dem Andruckelement (2) eine um das Rohr (5) herum angebrachte Dichtung (6) an Muffe (4) und Rohr (5) drückbar ist.
**dadurch gekennzeichnet, dass**
bei demjenigen Stück (2, 3) von Andruckstück (2) und Gegenstück (3), welches ein Innengewinde (7) aufweist, die mindestens zwei Teile (19, 19', 12a, 12b, 12, 12') des Stücks (2, 3) Zähne (15, 15a) aufweisen, welche ineinander greifen und die Position der mindestens zwei Teile (19, 19', 12a, 12b, 12, 12') zueinander in Längsrichtung des Stücks (2, 3) fixieren,
und dass die Zähne (15, 15a) eine Bohrung (20) in Längsrichtung aufweisen, durch die ein Stift (14) oder eine Schraube (23) der Vorrichtung steckbar ist, so dass die ineinander greifenden Zähne (15, 15a) von den zwei Teilen (19, 19', 12a, 12b, 12, 12') eines Stücks (2, 3) senkrecht zur Längsrichtung fixiert werden.

2. Vorrichtung nach Anspruch 1, **dadurch gekennzeichnet, dass**
bei demjenigen Stück (2, 3) von Andruckstück (2) und Gegenstück (3), welches ein Aussengewinde (7) aufweist, die mindestens zwei Teile (19, 19', 12a, 12b, 12, 12') des Stücks form- und/oder kraftschlüssig miteinander verbunden sind.

3. Vorrichtung nach Anspruch 1 oder 2, **dadurch gekennzeichnet, dass**
das Andruckstück (2) im wesentlichen die Form eines Hohlzylinders aufweist, mit einem Innendurchmesser (18), welcher im wesentlichen dem Aussendurchmesser des Rohres (5) entspricht.

4. Vorrichtung nach Anspruch 3, **dadurch gekennzeichnet, dass**
das Andruckstück (2) an einem Längsende ein Aussengewinde aufweist und in ein Innengewinde eines Gegenstücks (3) einschraubbar ist.

5. Vorrichtung nach Anspruch 3, **dadurch gekennzeichnet, dass**
das Andruckstück (2) an einem Längsende ein Innengewinde aufweist, mit einem Durchmesser, der grösser ist als der Innendurchmesser (18), wobei in das Innengewinde ein Gegenstück (3) einschraubbar ist.

6. Vorrichtung nach einem der Ansprüche 1 bis 5, **dadurch gekennzeichnet, dass**
das Gegenstück (3) im wesentlichen die Form eines Hohlzylinders aufweist, mit einem Innendurchmesser (13), welcher im wesentlichen dem Aussendurchmesser der Muffe (4) zwischen zwei Aussenwülsten (8) entspricht

7. Vorrichtung nach Anspruch 6 unter Rückbezug auf Anspruch 4, **dadurch gekennzeichnet, dass**
das Gegenstück (3) an einem Längsende ein Innengewinde aufweist, mit einem Durchmesser (16) der grösser ist als der Innendurchmesser (13), wobei in das Innengewinde ein Andruckstück (2) einschraubbar ist.

8. Vorrichtung nach Anspruch 6 unter Rückbezug auf Anspruch 5, **dadurch gekennzeichnet, dass**
das Gegenstück (3) an einem Längsende ein Aussengewinde aufweist und in ein Innengewinde eines Andruckstücks (2) einschraubbar ist.

9. Vorrichtung nach Anspruch 1, **dadurch gekennzeichnet, dass**
das Gegenstück (3) im wesentlichen die Form eines Hohlzylinders aufweist, mit zwei an entgegengesetzten Längsenden angeordneten Innengewinden, in welche zwei Andruckstücke (2, 2') einschraubbar sind.

10. Bausatz zur Herstellung einer Vorrichtung zum Abdichten von undichten Muffen und Pressverbindungen nach einem der Ansprüche 1 bis 9.

## Claims

1. Device (1) for sealing leaking couplings and compression joints, with a pressure piece (2), which can be applied around a pipe (5), and a counter piece (3), which can be applied around a coupling (4) which is connected to the said pipe (5), wherein
the pressure piece (2) and the counter piece (3) have in each case a thread (7) and can be connected in a form-fitting manner with each other by means of this thread (7),
the pressure piece (2) consists of at least two parts (19, 19') and the counter piece (3) consists of at least two parts (12a, 12b, 12, 12'), and
a seal (6), which is attached around the pipe (5), can be pressed against the coupling (4) and the pipe (5) by means of the pressure element (2),
**characterised in that**
in the piece (2, 3) made up of pressure piece (2) and counter piece (3), which has an internal thread (7), the at least two parts (19, 19', 12a, 12b, 12, 12') of the piece (2, 3) have teeth (15, 15a), which engage in each other and fix the position of the at least two parts (19, 19', 12a, 12b, 12, 12') with respect to each other in the longitudinal direction of the piece (2, 3),
and that the teeth (15, 15a) have a bore (20) in the longitudinal direction, through which a pin (14) or a screw (23) of the device can be placed, so that the teeth (15, 15a) of the two parts (19, 19', 12a, 12b, 12, 12') of a piece (2, 3), which teeth engage in each other, are fixed perpendicularly with respect to the longitudinal direction.

2. Device according to Claim 1, **characterised in that**
in the piece (2, 3) made up of pressure piece (2) and counter piece (3), which has an external thread (7), the at least two parts (19, 19', 12a, 12b, 12, 12') of the piece are connected to each other in a form-fitting and/or force-fitting manner.

3. Device according to Claim 1 or 2, **characterised in that**
the pressure piece (2) has essentially the shape of a hollow cylinder, with an internal diameter (18) which corresponds essentially to the external diameter of the pipe (5).

4. Device according to Claim 3, **characterised in that**
the pressure piece (2) has an external thread at one longitudinal end and can be screwed into an internal thread of a counter piece (3).

5. Device according to Claim 3, **characterised in that**
the pressure piece (2) has an internal thread at one longitudinal end, with a diameter which is greater than the internal diameter (18), with it being possible for a counter piece (3) to be screwed into the internal thread.

6. Device according to one of Claims 1 to 5, **characterised in that**
the counter piece (3) has essentially the shape of a hollow cylinder, with an internal diameter (13) which corresponds essentially to the external diameter of the coupling (4) between two external beads (8).

7. Device according to Claim 6 with reference to Claim 4, **characterised in that**
the counter piece (3) has an internal thread at one longitudinal end, with a diameter (16) which is greater than the internal diameter (13), with it being possible for a pressure piece (2) to be screwed into the internal thread.

8. Device according to Claim 6 with reference to Claim 5, **characterised in that**
the counter piece (3) has an external thread at one longitudinal end and can be screwed into an internal thread of a pressure piece (2).

9. Device according to Claim 1, **characterised in that**
the counter piece (3) essentially has the shape of a hollow cylinder, with two internal threads arranged at opposite longitudinal ends, into which threads two pressure pieces (2, 2') can be screwed.

10. Construction kit for producing a device for sealing leaking couplings and compression joints according to one of Claims 1 to 9.

## Revendications

1. Dispositif (1) pour rendre étanche des manchons et raccords sertissables non étanches, comportant une pièce de serrage (2), qui peut être montée autour d'un tuyau (5), et une contre-pièce (3), qui peut être montée autour du manchon (4) relié audit tuyau (5), dans lequel
la pièce de serrage (2) et la contre-pièce (3) présentent respectivement un filetage (7) et peuvent être reliées l'une à l'autre par conjonction de forme par l'intermédiaire de ce filetage (7),
la pièce de serrage (2) est constituée d'au moins deux pièces (19,19') et la contre-pièce (3) est constituée d'au moins deux pièces (12a,12b,12,12') et, au moyen de l'élément de serrage (2), un joint d'étanchéité (6) montré autour du tuyau (5) peut être pressé sur le manchon (4) et le tuyau (5),
**caractérisé en ce que**
dans le cas de ladite pièce (2,3) parmi la pièce de serrage (2) et la contre-pièce (3), qui présente un filetage intérieur (7), les au moins deux parties (19,19',12a,12b,12,12') de la pièce (2,3) présentent des dents (15,15a), qui s'engrènent les unes dans les autres et fixent la position des au moins deux pièces (19,19',12a,12b,12,12') l'une par rapport à l'autre dans la direction longitudinale de la pièce (2,3),
et **en ce que** les dents (15,15a) présentent un alésage (20) dans la direction longitudinale, à travers lequel une broche (14) ou une vis (23) du dispositif peut être enfichée, de sorte que les dents (15,15a) s'engrènant les unes dans les autres soient fixées par les deux parties (19,19',12a,12b,12,12') d'une pièce (2,3) perpendiculairement à la direction longitudinale.

2. Dispositif selon la revendication 1, **caractérisé en ce que**
dans le cas de ladite pièce (2,3) parmi la pièce de serrage (2) et la contre-pièce (3), qui présente un filetage extérieur (7), les au moins deux parties (19,19',12a,12b,12,12') de la pièce sont reliées l'une à l'autre par conjonction de forme et/ou de force.

3. Dispositif selon la revendication 1 ou 2, **caractérisé en ce que**
la pièce de serrage (2) présente essentiellement la forme d'un cylindre creux, avec un diamètre intérieur (18), qui correspond essentiellement au diamètre extérieur du tuyau (5).

4. Dispositif selon la revendication 3, **caractérisé en ce que**
la pièce de serrage (2) présente à une extrémité longitudinale un filetage extérieur et peut être vissée dans un filetage intérieur d'une contre-pièce (3).

5. Dispositif selon la revendication 3, **caractérisé en ce que**
la pièce de serrage (2) présente à une extrémité longitudinale un filetage intérieur, avec un diamètre, qui est plus grand que le diamètre intérieur (18), moyennant quoi une contre-pièce (3) peut être vissée dans le filetage intérieur.

6. Dispositif selon une des revendications 1 à 5, **caractérisé en ce que**
la contre-pièce (3) présente essentiellement la forme d'un cylindre creux, avec un diamètre intérieur (13), qui correspond essentiellement au diamètre extérieur du manchon (4) entre deux bourrelets extérieurs (8).

7. Dispositif selon la revendication 6 se rattachant à la revendication 4, **caractérisé en ce que**
la contre-pièce (3) présente à une extrémité longitudinale un filetage intérieur, avec un diamètre (16), qui est plus grand que le diamètre intérieur (13), moyennant quoi une pièce de serrage (2) peut être vissée dans le filetage intérieur.

8. Dispositif selon la revendication 6 se rattachant à la revendication 5, **caractérisé en ce que**
la contre-pièce (3) présente à une extrémité longitudinale un filetage extérieur et peut être vissée dans un filetage intérieur d'une pièce de servage (2).

9. Dispositif selon la revendication 1, **caractérisé en ce que**
la contre-pièce (3) présente essentiellement la forme d'un cylindre creux, avec deux filetages intérieurs disposés à des extrémités longitudinales opposées, dans lesquels deux pièces de serrage (2,2') peuvent être vissées.

10. Jeu de pièces de construction pour la fabrication d'un dispositif pour rendre étanche des manchons et raccords sertissables non étanches selon une des revendications 1 à 9.
